# EUROPEAN PATENT APPLICATION

(11) **EP 1 734 453 A1**
(43) Date of publication of application: **20.12.2006**
(21) Application number: 04771096.7
(22) Date of filing: 30.07.2004
(51) Int. Cl.: G06F 13/00

(54) **CHAT SYSTEM, COMMUNICATION APPARATUS, CONTROL METHOD THEREOF, AND INFORMATION RECORDING MEDIUM**

(30) Priority: 31.03.2004 JP 2004108023
(71) Applicant: Konami Digital Entertainment Co., Ltd., Minato-ku Tokyo 106-6114 (JP)
(72) Inventor: SATO, Hideaki, c/o Konami Dig. Entert. Co., Ltd., Tokyo 1066114 (JP); SAITO, Mikio, c/o Konami Dig. Entert. Co., Ltd., Tokyo 1066114 (JP); YAMAGISHI, Takao, c/o Konami Dig. Entert. Co., Ltd, Tokyo 1066114 (JP)
(74) Representative: Winter, Brandl, Fürniss, Hübner Röss, Kaiser, Polte Partnerschaft Patent- und Rechtsanwaltskanzlei
(86) International application number: PCT/JP2004/010936
(87) International publication number: WO 2005/101216

(57) **Abstract**

The invention provides a chat system in which a change in the emotion of a sender is judged by a simple construction and can be outputted on a signal receiving side. Therefore, the chat system is comprising plural devices and inputs a message character string in each device and transmits the message character string to another device and receives and outputs the message character string in this another device. The chat system includes a device for determining an emotion level in accordance with passage of time from the input timing of a certain message character string to the input timing of another message character string; and a device for outputting at least one of an image and a sound according to the determined emotion level in this another device.

## Description

### TECHNICAL FIELD

The present invention relates to a chat system, a communication device used in the chat system, a control method of the communication device and an information storage medium, and particularly relates to a system for outputting an image, etc. showing emotion of a user.

### BACKGROUND ART

In the chat system, there is a structure in which information showing the content of an emotion is inputted to transmit the emotion of a sender to a partner and is transmitted together with a message or separately from the message, and an image showing the content of the emotion according to this information, e.g., an avatar (alter ego) image of an expression according to the information inputted by the sender is displayed on a signal receiving side. In accordance with such a system, the contents of the emotion of the sender can be transmitted to the partner so that smooth communication can be realized.

### DISCLOSURE OF THE INVENTION

### Problems to be Solved by the Invention

However, in the above system in accordance with the background art, no sender can transmit the information showing the contents of the emotion to the partner unless the sender inputs this information every time, which is very complicated.

The present invention is made in consideration of the above problems and its object is to provide a chat system, a communication device used in the chat system, a control method of the communication device and an information storage medium in which a change in the emotion of the sender is judged by a simple construction and can be outputted on the signal receiving side.

### Means for Solving the Problem

To solve the above problems, a chat system in the present invention is characterized in that the chat system is comprising plural devices and inputs a message character string in each device and transmits the message character string to another device and receives and outputs the message character string in this another device, wherein the chat system includes means for determining an emotion level in accordance with passage of time from the input timing of a certain message character string to the input timing of another message character string; and means for outputting at least one of an image and a sound according to the determined emotion level in the another device.

In accordance with the present invention, the emotion level is determined in accordance with the passage of time from the input timing of a certain message character string to the input timing of another message character string, and the image and the sound according to this emotion level are outputted in the second device. Accordingly, a message receiving person can intuitively grasp this emotion without bearing a burden on a sender. For example, the sound is a voice, music, etc. (which is hereinafter similar).

The chat system in the present invention is also characterized in a chat system including a first device and a second device in which the first device includes means for inputting a message character string; means for inputting emotion kind data showing the kind of an emotion; means for transmitting the inputted message character string to the second device; and means for transmitting the inputted emotion kind data to the second device; and the second device includes means for receiving the message character string from the first device; means for receiving the emotion kind data from the first device; means for outputting the received message character string; means for obtaining an emotion level determined in accordance with input timing of the message character string in the first device; and means for outputting at least one of an image and a sound according to the received emotion kind data and the obtained emotion level.

In accordance with the present invention, the emotion kind data inputted in the first device, and the image and the sound according to the emotion level determined in accordance with the input timing of the message character string in the first device are outputted in the second device. Accordingly, the message receiving person can intuitively grasp this emotion without burdening the sender.

Here, for example, "the emotion kind data" are data showing the kind of an emotion of the sender such as joy, anger, sadness, merriness, etc. Further, "the input timing of the above message character string in the above first device" includes all timings corresponding to the input timing of the message character string in the first device such as completion timing of the input of the message character string in the first device, transmission timing of the message character string at a destination from the first device to the second device, timing for receiving or outputting the message character string in the second device, timing for receiving or transmitting the message character string in a relay device for relaying communication of the first device and the second device, etc.

A communication device in the present invention is characterized in that the communication device is used in a chat system and includes means for inputting a message character string; means for inputting emotion kind data showing the kind of an emotion; means for determining an emotion level in accordance with input timing of the message character string; means for transmitting the inputted message character string; means for transmitting the inputted emotion kind data; and means for transmitting the determined emotion level.

Further, a control method of a communication device in the present invention is used in a chat system and includes a step for receiving the input of a message character string; a step for receiving the input of emotion kind data showing the kind of an emotion; a step for determining an emotion level in accordance with input timing of the message character string; a step for transmitting the inputted message character string; a step for transmitting the inputted emotion kind data; and a step for transmitting the determined emotion level.

Further, the information storage medium in the present invention is an information storage medium storing a program for making a computer function as means for inputting a message character string; means for inputting emotion kind data showing the kind of an emotion; means for determining an emotion level in accordance with input timing of the message character string; means for transmitting the inputted message character string; means for transmitting the inputted emotion kind data and means for transmitting the determined emotion level.

In accordance with the present invention, the emotion level can be determined on the input and transmitting sides of the message character string.

Further, the communication device in the present invention is characterized in that the communication device is used in a chat system and includes means for receiving a message character string; means for receiving emotion kind data; means for outputting the received message character string; means for determining an emotion level in accordance with input timing of the message character string; and means for outputting at least one of an image and a sound according to the received emotion kind data and the determined emotion level.

Further, a control method of a communication device in the present invention is used in a chat system and includes a step for receiving a message character string; a step for receiving emotion kind data; a step for outputting the received message character string; a step for determining an emotion level in accordance with input timing of the message character string; and a step for outputting at least one of an image and a sound according to the received emotion kind data and the determined emotion level.

Further, the information storage medium in the present invention is an information storage medium storing a program for making a computer function as means for receiving a message character string; means for receiving emotion kind data; means for outputting the received message character string; means for determining an emotion level in accordance with input timing of the message character string; and means for outputting at least one of an image and a sound according to the received emotion kind data and the determined emotion level.

In accordance with the present invention, the emotion level can be determined on the receiving and output sides of the message character string.

In one mode of the present invention, the emotion level is further determined in accordance with the number of characters of the message character string. For example, the number of characters of the message character string is a character number itself of the message character string, or a character number, etc. weighted-with respect to a character difficult to be inputted such as a special Chinese character, etc. In accordance with this mode, it is possible to appropriately evaluate whether the message character string is rapidly inputted, or is slowly inputted in reverse, etc. An appropriate emotion level can be determined in accordance with this evaluation.

Further, in one mode of the present invention, the emotion level is determined in accordance with an input interval of the message character string in the first device. Thus, when the sender is successively inputting the message character string, etc., it is possible to judge the emotion level, e.g., very happy, or very angry, etc.

Further, in one mode of the present invention, the second device further includes means for inputting the message character string; and means for transmitting the inputted message character string to the first device; the first device further includes means for receiving the message character string from the second device; and means for outputting the received message character string; and the emotion level is determined in accordance with the difference between the input timing of the message character string in the second device and the input timing of the message character string in the first device.

"The input timing of the above message character string in the above second device" includes all timings corresponding to the input timing of the message character string in the second device such as completion timing of the input of the message character string in the second device, transmission timing of the message character string at a destination from the second device to the first device, timing for receiving or outputting the message character string in the first device, timing for receiving or transmitting the message character string in the relay device for relaying the communication of the first device and the second device, etc.

In accordance with this mode, for example, when the time from the timing for receiving or outputting the message character string, etc. to the timing for inputting or transmitting the message character string in accordance with this reception of output, etc. is short, it is possible to judge the emotion level, e.g., very happy, or very angry, etc.

### BRIEF DESCRIPTION OF THE DRAWINGS

Fig. 1 is a view showing the entire construction of a chat system in accordance with an embodiment mode of the present invention.
Fig. 2 is a view showing one example of a chat screen.
Fig. 3 is a view showing one example of a chat log.
Fig. 4 is a view showing an avatar image group corresponding to an emotion kind "happy".
Fig. 5 is a view showing an avatar image group corresponding to an emotion kind "angry".
Fig. 6 is a view showing an avatar image group corresponding to an emotion kind "sad".
Fig. 7 is a view for explaining the situation of a change of the avatar image.
Fig. 8 is a function block diagram of a server.
Fig. 9 is a view showing the stored contents of an emotion data storage section.
Fig. 10 is a function block diagram of a client.
Fig. 11 is a flow chart showing emotion data management processing in the server.
Fig. 12 is a function block diagram of the client in accordance with a modified example.

### DESCRIPTION OF NUMERAL REFERENCES

12 SERVER, 14 DATA COMMUNICATION NETWORK, 16A 16B CLIENT, 18 EMOTION KIND INPUT COLUMN, 20A PERSONAL INFORMATION DISPLAY AREA, 20B PARTNER INFORMATION DISPLAY AREA, 22A 22B BLOWING-OUT IMAGE, 24A 24B AVATAR IMAGE, 26 MESSAGE CHARACTER STRING INPUT COLUMN, 30 40 COMMUNICATION SECTION, 32 52 EMOTION DATA MANAGING SECTION, 34 50 EMOTION DATA STORAGE SECTION, 42 MESSAGE INPUT SECTION, 44 DISPLAY SECTION, 46 AVATAR IMAGE STORAGE SECTION, 48 EMOTION KIND INPUT SECTION.

### BEST MODE FOR CARRYING OUT THE INVENTION

One embodiment mode of the present invention will next be explained in detail on the basis of the drawings.

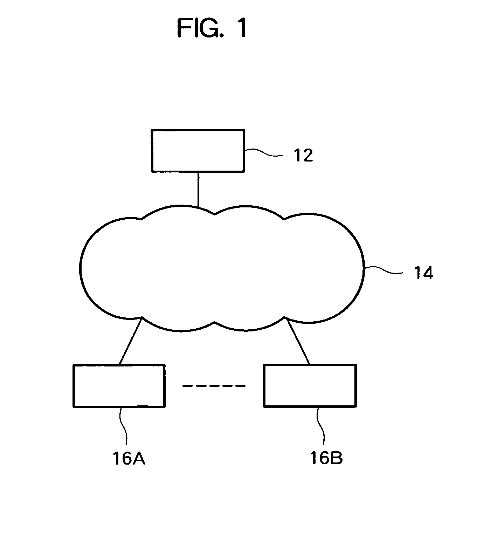

Fig. 1 is a view showing the entire construction of a chat system in accordance with one embodiment mode of the present invention. As shown in this figure, this chat system is comprised of a server 12 and clients 16A, 16B. Each of the server 12 and the clients 16A, 16B is communicatively connected to a data communication network 14 such as the Internet, etc, so that data can be mutually communicated. In the following description, when it is not necessary to particularly distinguish the clients 16A, 16B, the clients 16A, 16B are simply noted as a client 16.

The server 12 is realized by a publicly known server computer centrally constructed by a processor, various kinds of memory devices and a data communication device. The server 12 manages and relays a chat made by the client 16A and the client 16B. On the other hand, the client 16 is realized by various kinds of computer systems such as a publicly known personal computer or a publicly known computer game system, etc. centrally constructed by a monitor, an input means such as a keyboard, etc., a processor, various kinds of memory devices and a data communication device. The client 16 is used to perform a chat (a conversation using giving and receiving of a message character string) by each user.

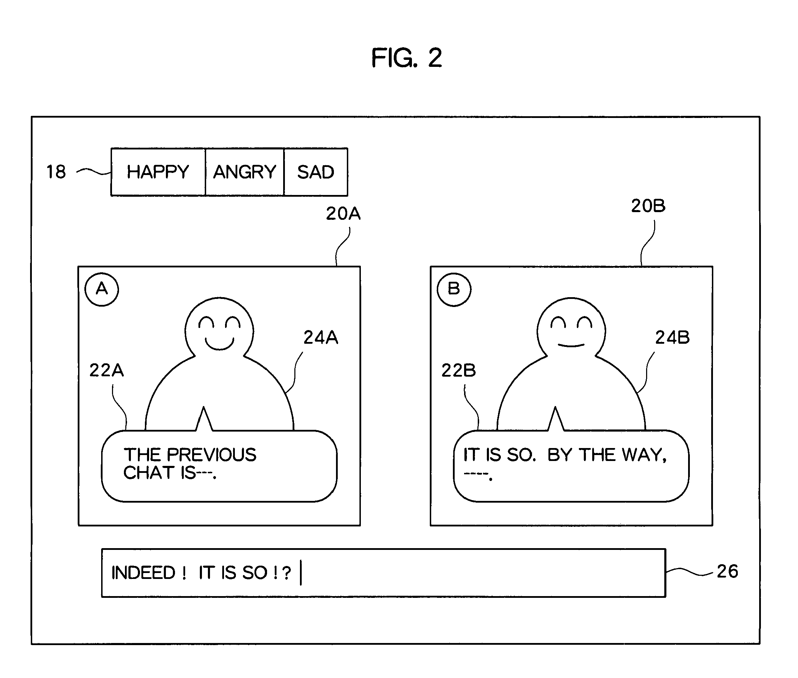

Fig. 2 shows one example of a chat screen displayed in the monitor of the client 16A. A similar chat screen is also displayed in the monitor of the client 16B. As shown in this figure, a personal information display area 20A corresponding to a user (hereinafter noted as "user A") of the client 16A, a partner information display area 20B corresponding to a user (hereinafter noted as "user B") of a chat partner, i.e., the client 16B, a message character string input column 26 for inputting the message character string and an emotion kind input column 18 are arranged on this chat screen. An avatar image 24A representing the user A is displayed in the personal information display area 20A. A blowing-out image 22A is displayed below the personal information display area 20A. The message character string inputted by the user A is sequentially displayed within this blowing-out image 22A. Similarly, an avatar image 24B representing the user B is displayed in the partner information display area 20B. A blowing-out image 22B is also displayed below the partner information display area 20B. The message character string inputted by the user B is sequentially displayed within this blowing-out image 22B. The message character string input column 26 is a character string editing area used to input the message character string (a character string as a message to the partner) using a character input means such as a keyboard, etc. by the user A. The message character string can be completed by sequentially inputting a character to a cursor position displayed in this message character string input column 26. The message character string displayed in this message character string input column 26 can be transmitted toward the user B as a chat partner by performing an input completing operation of a return key, etc. The characters of "happy", "angry" and "sad" are displayed in the emotion kind input column 18, and an emotion kind of the avatar image 24A representing the user A can be set and inputted by selecting one of these characters by a predetermined emotion kind switching operation. Thus, the expression of the avatar image 24A can be changed.

As mentioned above, a chat screen similar to that shown in Fig. 2 is also displayed in the client 16B used by the chat partner. On this chat screen, the same image as the avatar image 24A is displayed in the partner information display area. The same image as the avatar image 24B is also displayed in the personal information display area. Therefore, when the user A sets and inputs the emotion kind of the avatar image 24A by the emotion kind input column 18 and changes the expression of the avatar image 24A, the expression of the avatar image shown in the partner information display area of the chat screen of the client 16B is similarly changed in association with this change of the avatar image 24A. Thus, the emotion can be transmitted to the chat partner, i.e., the user B by using the avatar image as well as the characters.

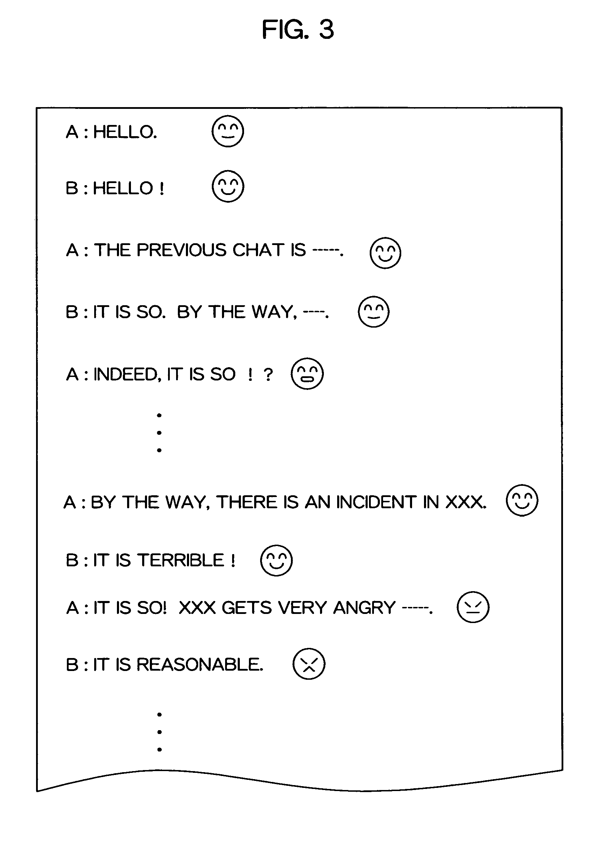

In the client 16, a chat log can be displayed in the monitor by performing a specific operation. Fig. 3 shows one example of this chat log. As shown in this figure, the chat log correspondingly displays in a time series a character (here "A" or "B") for discriminating the user A and the user B as chat persons concerned, the message character string as a speech of this chat partner concerned, and images corresponding to an emotion kind and an emotion level corresponding to the chat person concerned inputting this message character string at a displaying time point of this message character string. On the chat screen already explained, only newest speeches are displayed in the blowing-out images 22A, 22B and no past speeches are displayed. However, the past speeches can be immediately grasped by displaying the chat log shown in Fig. 3.

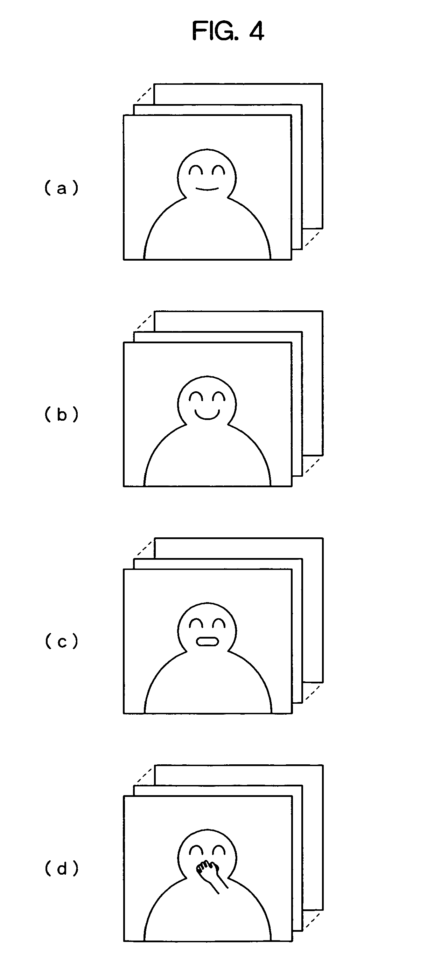

The avatar images 24A, 24B are stored in a memory means of the client 16 in advance and are selectively read from this memory means and are displayed in the monitor. Figs. 4 to 6 show an avatar image group stored in the memory means of the client 16. An avatar image group corresponding to the emotion kind "happy" is shown in Fig. 4. Specifically, an avatar image group corresponding to the emotion kind "happy" and an emotion level "1" is shown in Fig. 4 (A). Similarly, an avatar image group corresponding to the emotion kind "happy" and an emotion level "2" is shown in Fig. 4(B). An avatar image group corresponding to the emotion kind "happy" and an emotion level "3" is shown in Fig. 4 (C). An avatar image group corresponding to the emotion kind "happy" and an emotion level "4" is shown in Fig. 4(D). As can be seen from these figures, the strength of the emotion is increased as the emotion level is raised even in the same emotion kind. The expression of the avatar image is correspondingly changed.

Plural avatar images are stored in the client 16 so as to correspond to the same emotion kind and the same emotion level, but are avatar images showing different characters. Namely, in this chat system, for example, plural characters drawing "a man in his twenties", "a teenaged woman", "a woman in her forties", etc. are prepared, and an image (avatar image) corresponding to each emotion kind and each emotion level is made in advance so as to correspond to each character. In this embodiment mode, a user designates the character used as a personal avatar image in advance. On the chat screen shown in Fig. 2, the image of the character designated by the user in this way is displayed as the avatar image of the same user.

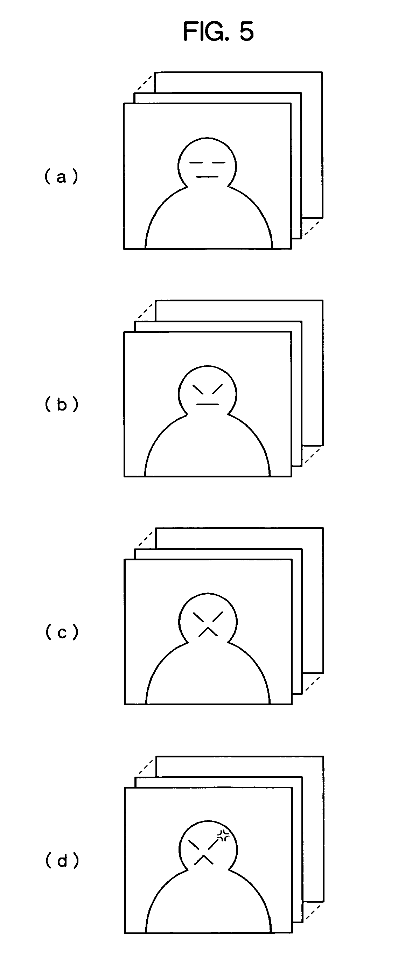

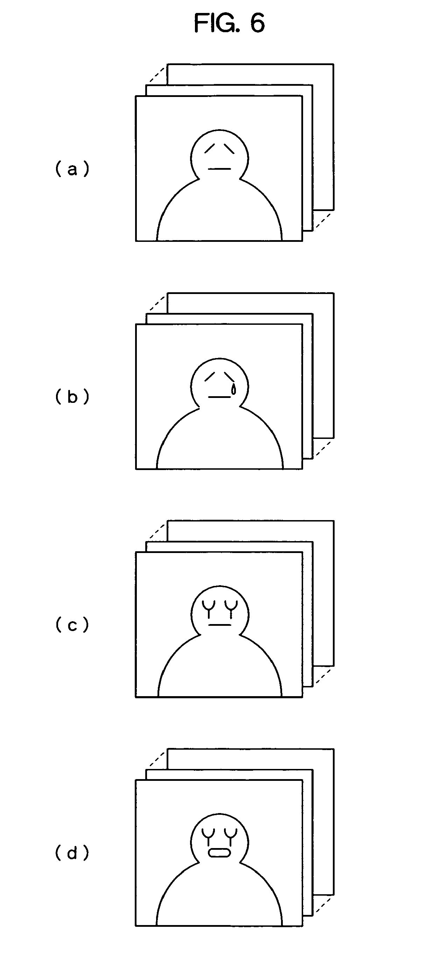

Similar to the case of the emotion kind "happy", an avatar image group corresponding to the emotion kind "angry" is shown in Fig. 5. Concretely, an avatar image group corresponding to the emotion kind "angry" and an emotion level "1" is shown in Fig. 5 (A). Similarly, an avatar image group corresponding to the emotion kind "angry" and an emotion level "2" is shown in Fig. 5 (B). An avatar image group corresponding to the emotion kind "angry" and an emotion level "3" is shown in Fig. 5 (C). An avatar image group corresponding to the emotion kind "angry" and an emotion level "4" is shown in Fig. 5 (D). An avatar image group corresponding to the emotion kind "sad" is also shown in Fig. 6. Concretely, an avatar image group corresponding to the emotion kind "sad" and an emotion level "1" is shown in Fig. 6(A). An avatar image group corresponding to the emotion kind "sad" and an emotion level "2" is shown in Fig. 6(B). An avatar image group corresponding to the emotion kind "sad" and an emotion level "3" is shown in Fig. 6(C). An avatar image group corresponding to the emotion kind "sad" and an emotion level "4" is shown in Fig. 6(D).

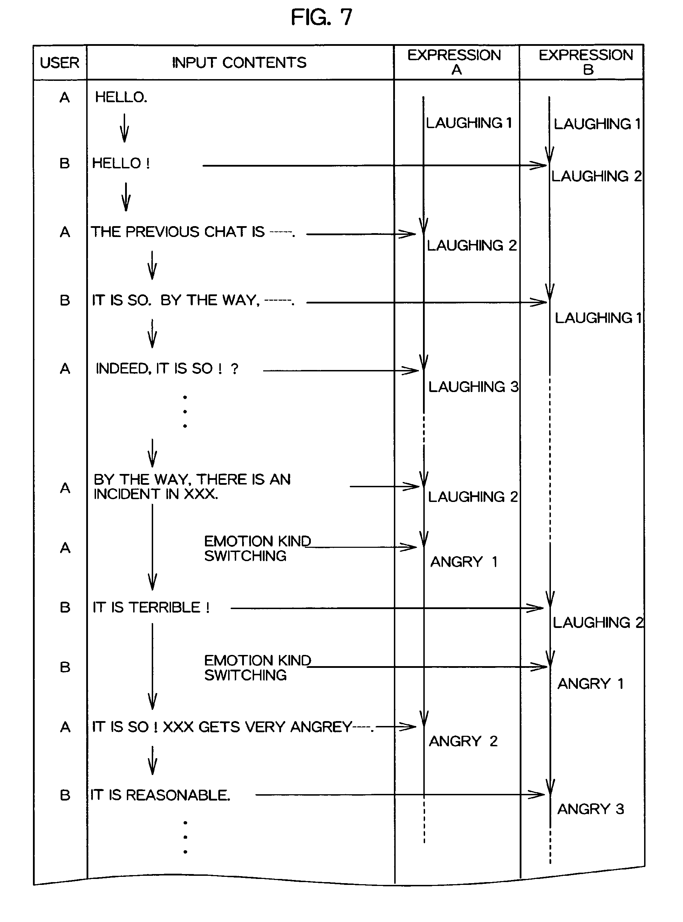

Here, an expression change of the avatar image will be further explained in detail. Fig. 7 is a view for explaining the expression changes of avatar images corresponding to the user A and the user B. A character ("A" or "B") for discriminating the user transmitting the message character string or performing the emotion kind switching operation is noted in a first column of Fig. 7. The contents of the transmitted message character string or the execution of the emotion kind switching operation is noted in a second column. The expression of the avatar image corresponding to the user A is noted in a third column. The expression of the avatar image corresponding to the user B is noted in a fourth column. In the third and fourth columns, for example, "laughing" shows the emotion kind "happy", and "angry" shows the emotion kind "angry", and numerical values such as "1", etc. show emotion levels. In Fig. 7, for example, since the input interval from "Hello ! " of the user A to "Hello ! " of the user B is short, the emotion level is raised and the expression of the avatar image corresponding to the user B is changed from "laughing 1" to "laughing 2". Further, when the user A performs the emotion kind switching operation after the user A inputs "by the way, there is an incident in XXX ---.", the expression of the avatar image corresponding to the user A is changed into "angry 1". Namely, in this embodiment mode, when the emotion kind switching operation is performed, the emotion level is reset to 1 in accordance with this emotion kind switching operation.

The construction and the operation of this system will next be further explained in detail.

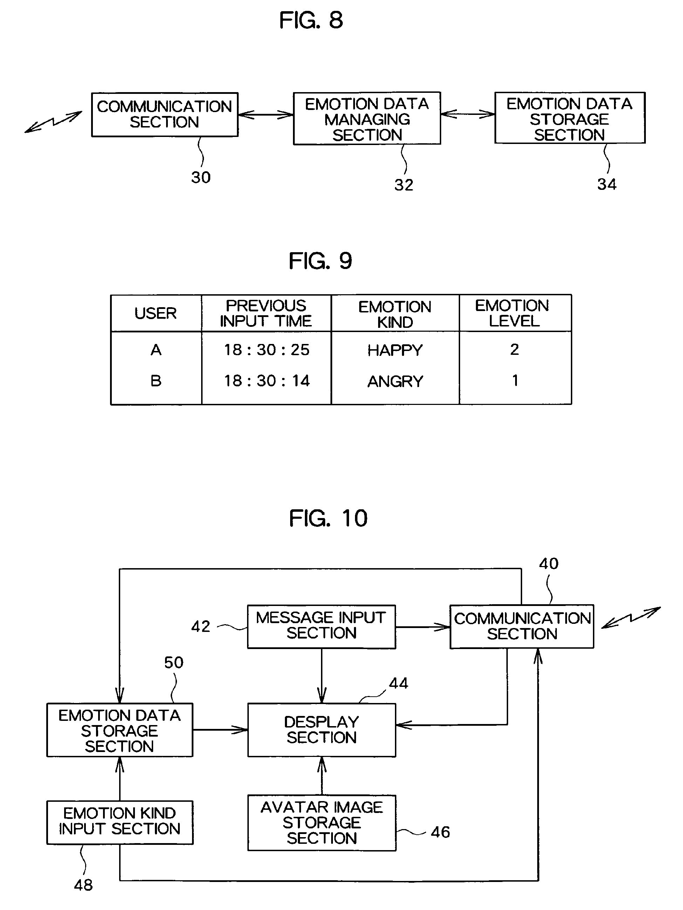

Fig. 8 is a view showing the functional construction of the server 12. As shown in this figure, the server 12 functionally includes a communication section 30, an emotion data managing section 32 and an emotion data storage section 34. These function blocks are realized by executing a predetermined program in the server 12. For example, the communication section 30 is comprising a publicly known data communication card, and performs data communication with the client 16 through the data communication network 14. In particular, the communication section 30 receives the message character string transmitted from the client 16A and transfers this message character string to the client 16B. Further, the communication section 30 receives the message character string transmitted from the client 16B and transfers this message character string to the client 16A. At this time, the communication section 30 notifies a receiving time of the message character string from each client 16 to the emotion data managing section 32 as input timing of the message character string in the client 16.

Further, when the communication section 30 receives emotion kind data from the client 16A or 16B, the communication section 30 delivers this emotion kind data to the emotion data managing section 32. Further, the communication section 30 receives an emotion data update request showing updated contents of the emotion data from the emotion data managing section 32 and transmits this emotion data update request to the client 16A and the client 16B. The emotion data are data including at least one of the emotion kind data and the emotion level.

The emotion data managing section 32 manages and delivers the emotion data stored in the emotion data storage section 34. Namely, the emotion data storage section 34 is comprising a memory means such as a hard disk memory device, a RAM, etc., and stores the emotion data. Fig. 9 shows one example of the emotion data stored in this emotion data storage section 34. As shown in this figure, the emotion data are constructed by correspondingly setting information for discriminating each user performing a chat, an input time of the previous message character string inputted by this user, the emotion kind set (designated) at present, and the present emotion level. Here, it is noted that the present emotion kind of the user A is "happy" and the emotion level is "2" and the just before message character string is inputted at eighteen thirty and 25 seconds. Further, it is noted that the present emotion kind of the user B is "angry" and the emotion level is "1" and the just before message character string is inputted at eighteen thirty and 14 seconds.

When the emotion data managing section 32 first receives the emotion kind data from the client 16, the emotion data managing section 32 changes the emotion kind stored in the emotion data storage section 34 into the emotion kind shown by these emotion kind data corresponding to the user of this client 16. At this time, the emotion data managing section 32 initializes the emotion level stored in the emotion data storage section 34 to 1 corresponding to the same user.

Further, when the message character string is received from the client 16 and the input timing of the message character string is notified from the communication section 30, the difference between this input time and the previous input time stored in the emotion data storage section 34 corresponding to a chat partner of the user transmitting the same message character string is calculated. This difference is then divided by the number of characters of the message character string received from the client 16, and a time difference per unit number of characters is calculated. If this time difference per unit number of characters is less than a first predetermined value, the emotion level stored in the emotion data storage section 34 corresponding to the user transmitting this message character string is raised by 1. When the emotion level is already a maximum value, this level raising processing is not performed. In contrast, if the time difference per unit number of characters is a second predetermined value or more different from the above first predetermined value, the emotion level stored in the emotion data storage section 34 corresponding to the user transmitting this message character string is lowered by 1. When the emotion level is already a lowest value, this level lowering processing is not performed. In accordance with the above construction, in response to the message character string inputted from the chat partner, the emotion level of its user can be rapidly raised when a message character string according to this message character string is inputted. When the response is slow, the emotion level of its user can be lowered.

Thereafter, the time of notification from the communication section is stored in the emotion data storage section 34 corresponding to the user as a signal transmitting person of the message character string so that the previous input time is updated. The updated contents of the emotion data stored in the emotion data storage section 34, i.e., an emotion data update request showing at least one of the emotion kind data and the emotion level is transmitted to both the client 16A and the client 16B.

When the message character string is received from the client 16 and the input timing of the message character string is notified from the communication section 30, the difference between this input time and the previous input time stored in the emotion data storage section 34 corresponding to the user transmitting this message character string may be also calculated. This difference is then divided by the number of characters of the message character string received from the client 16 and a time difference per unit number of characters is calculated. If this time difference is less than the first predetermined value, the emotion level stored in the emotion data storage section 34 corresponding to the user transmitting the message character string is raised by 1. In contrast, if the time difference is the second predetermined value or more different from the first predetermined value, the emotion level stored in the emotion data storage section 34 corresponding to the user transmitting the above message character string is lowered by 1. Thus, the emotion level is raised with respect to the user successively transmitting the message character string. On the contrary, when the transmitting interval of the message character string is long, or when the work of inputting the message character string itself is slow, the emotion level of the user can be lowered.

Fig. 10 is a view showing the functional construction of the client 16. As shown in this figure, the client 16 is functionally comprising a communication section 40, a message input section 42, a display section 44, an avatar image storage section 46, an emotion data storage section 50 and an emotion kind input section 48. These functions are realized by executing a predetermined program in the client 16.

First, the communication section 40 receives a message character string received from the server 12 and supplies this message character string to the display section 44. When the communication section 40 receives emotion data from the server 12, the communication section 40 reflects their contents in stored contents of the emotion data storage section 50. Further, when the message character string is inputted by the message input section 42, the communication section 40 transmits this message character string to the server 12. Emotion kind data are inputted from the emotion kind input section 48 to the communication section 40. When the communication section 40 receives these emotion kind data, the communication section 40 transmits these emotion kind data to the server 12.

The message input section 42 particularly includes a character input means such as a keyboard, etc., and inputs the message character string to a message character string input column 26 of the chat screen. The inputted message character string is synthesized in a blowing-out image 22 on the chat screen in the display section 44, and is displayed and outputted by a monitor.

For example, the avatar image storage section 46 is comprising a hard disk memory device, etc. , and various kinds of avatar images described in Figs. 4 to 6 are stored in the avatar image storage section 46. The emotion data storage section 50 stores the emotion kind and the emotion level corresponding to each user as a chat person concerned. The emotion kind corresponding to the user of the client 16 can be particularly set and inputted by the emotion kind input section 48. In this case, a character showing each emotion kind of the emotion kind input column 18 is selected and the emotion kind corresponding to this character can be stored in the emotion data storage section 50 by this selection corresponding to the user of this client 16. Further, when the communication section 40 receives an emotion data update request from the server 12, the emotion data storage section 50 is updated in accordance with its contents.

In the display section 44, the emotion kind and the emotion level of each user are read from the emotion data storage section 50 and its corresponding avatar image is read from the avatar image storage section 46. At this time, the display section 44 obtains character designation of each user in advance, and reads the avatar image corresponding to the designated character. The read avatar image is displayed in each of the personal information display area 20A and the partner information display area 20B by the display section 44.

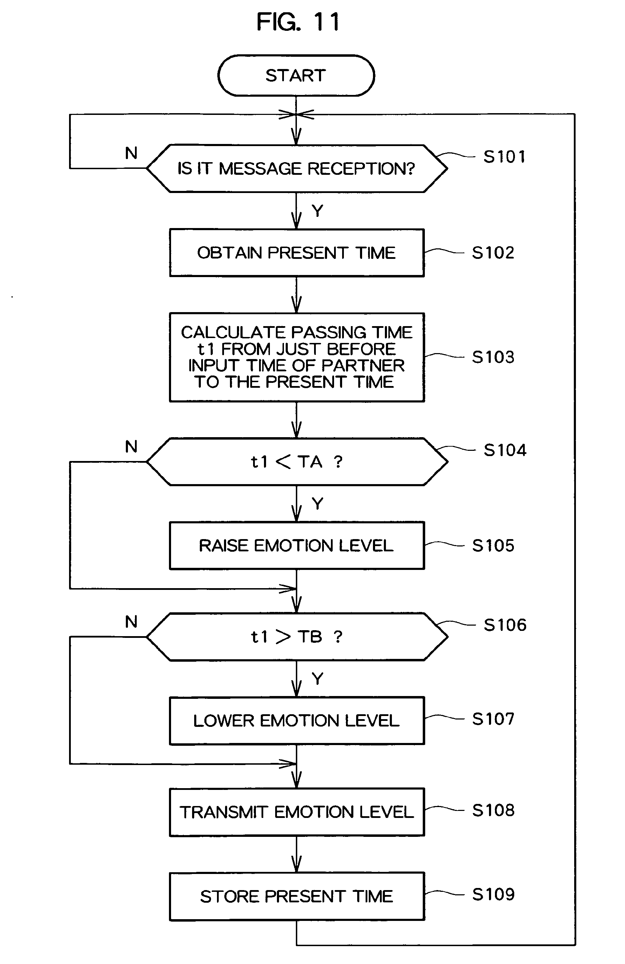

Here, the processing of the server 12 will be further explained. Fig. 11 is a flow chart showing emotion data management processing using the server 12. As shown in this figure, the server 12 monitors whether or not the message character string is received from any one of the clients 16 (S101). When the message character string is received, the present time is obtained from an unillustrated timer means (S102). Further, the previous input time corresponding to a user as a chat partner is read from the emotion data storage section 34 and a passing time t1 from this previous input time to the present time is calculated (S103). If this passing time t1 is less than a first predetermined value TA, the emotion level stored in the emotion data storage section 34 corresponding to the user as a signal transmitting person of the message character string is updated so as to be raised by 1 (S105). At this time, if the emotion level already reaches a maximum value, no processing of S105 is performed. In contrast to this, if the passage of time t1 is the first predetermined value TA or more, the processing of S105 is skipped. Further, it is judged whether the passage of time t1 is greater than a second predetermined value TB (TB>TA) or not (S106). If the passage of time t1 is greater than the second predetermined value TB, the emotion level stored in the emotion data storage section 34 corresponding to the user as the signal transmitting person of the message character string is updated so as to be lowered by 1 (S107). At this time, if the emotion level already reaches a lowest value, no processing of S107 is performed. In contrast to this, if the passage of time t1 is the second predetermined value TB or less, the processing of S107 is skipped.

Thereafter, the emotion level updated as mentioned above is transmitted to each client 16 as an emotion data update request (S108). Further, the present time obtained in S102 is stored in the emotion data storage section 34 corresponding to the user as the signal transmitting person of the message character string. Thus, the previous input time is updated.

In accordance with the chat system explained above, the expression of the avatar image is automatically changed in accordance with the input timing of the message character string. Accordingly, no special input for changing the expression of the avatar image is required and a convenient property of the user can be greatly improved.

The present invention is not limited to the above embodiment mode.

For example, in the above explanation, the avatar image is changed in accordance with the input timing of the message character string. However, a sound may be outputted in the client 16 and may be also changed in accordance with the input timing of the message character string. The sound in this case is music, a voice, etc. for reading e.g., the message character string. Thus, the emotion of the chat partner can be also judged from the change of the sound.

Further, in the above explanation, the signal reception timing in the server 12 is treated as the input timing of the message character string in the client 16. However, if the present time is obtained at the input time of the message character string in the client 16 and is transmitted to the server 12, timing nearer the input timing of the message character string can be treated as the input timing of the message character string in the client 16.

Further, here, the emotion level is raised and lowered in accordance with the passage of time from the input timing of the just before message character string to the input timing of the message character string of this time. However, the emotion level may also correspond to this passing time, or the range of a value obtained by dividing this passing time by the number of characters. Thus, the emotion level can be suddenly changed. Further, the passage of time, or an average of the value obtained by dividing this passing time by the number of characters, etc. and other statistic amounts may be also calculated, and the emotion level may be determined in accordance with this calculation.

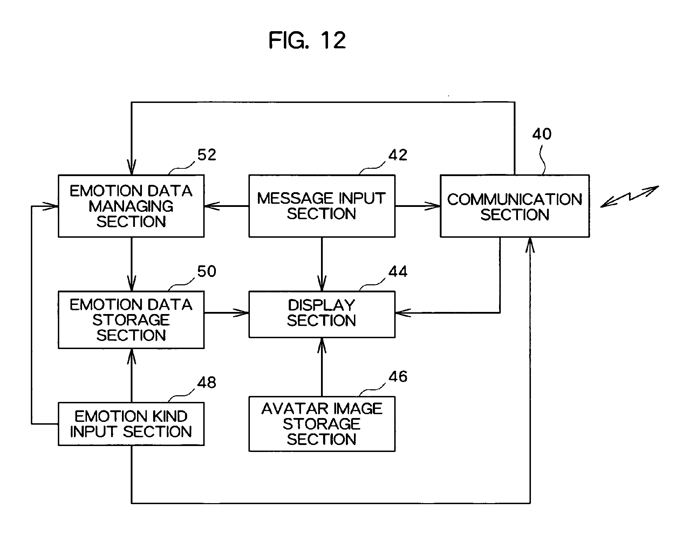

Further, the emotion data are here managed in the server 12, but may be also managed in each client 16. Fig. 12 is a view showing the functional construction of the client 16 in accordance with this modified example. As shown in this figure, this example is characterized in that an emotion data managing section 52 is arranged in the client 16. The other constructions are similar to those in the case of Fig. 10, and are designated by the same reference numerals as Fig. 10 and their detailed explanations are omitted here.

The message character string is inputted from the message input section 42 to the emotion data managing section 52. Further, the message character string received from another client 16 is inputted from the communication section 40. When the message character string is inputted from the message input section 42, the present time is obtained by an unillustrated timer means and the previous input time corresponding to the chat partner and stored in the emotion data storage section 50 is read, and the passage of time from this previous input time to the present time is read. Similar to the case of Fig. 11, the emotion level is then changed in accordance with this passing time. When the message character string is inputted from the communication section 40, the present time is obtained by the unillustrated timer means and the previous input time corresponding to the user of the client 16 and stored in the emotion data storage section 50 is read and the passage of time from this previous input time to the present time is read. Similar to the case of Fig. 11, the emotion level is then changed in accordance with this passing time. In this case, the reception timing of the message character string in the client 16 is treated as the input timing of this message character string.

## Claims

1. A chat system comprising plural devices and inputting a message character string in each device and transmitting the message character string to another device and receiving and outputting said message character string in this another device,
wherein the chat system includes:
means for determining an emotion level in accordance with passage of time from the input timing of a certain message character string to the input timing of another message character string; and
means for outputting at least one of an image and a sound according to said determined emotion level in said another device.

2. A chat system including a first device and a second device in which
said first device includes:
means for inputting a message character string;
means for inputting emotion kind data showing the kind of an emotion;
means for transmitting said inputted message character string to said second device; and
means for transmitting said inputted emotion kind data to said second device; and
said second device includes:
means for receiving said message character string from said first device;
means for receiving said emotion kind data from said first device;
means for outputting said received message character string;
means for obtaining an emotion level determined in accordance with input timing of said message character string in said first device; and
means for outputting at least one of an image and a sound according to said received emotion kind data and said obtained emotion level.

3. The chat system according to claim 2, wherein
said emotion level is further determined in accordance with the number of characters of said message character string.

4. The chat system according to claim 2 or 3, wherein
said emotion level is determined in accordance with an input interval of said message character string in said first device.

5. The chat system according to claims 2 to 4, wherein
said second device further includes:
means for inputting the message character string; and
means for transmitting the inputted message character string to said first device;
said first device further includes:
means for receiving said message character string from said second device; and
means for outputting said received message character string; and
said emotion level is determined in accordance with the difference between the input timing of the message character string in said second device and the input timing of the message character string in said first device.

6. A communication device used in a chat system and including:
means for inputting a message character string;
means for inputting emotion kind data showing the kind of an emotion;
means for determining an emotion level in accordance with input timing of said message character string;
means for transmitting said inputted message character string;
means for transmitting said inputted emotion kind data; and
means for transmitting said determined emotion level.

7. A communication device used in a chat system and including:
means for receiving a message character string;
means for receiving emotion kind data;
means for outputting said received message character string; means for determining an emotion level in accordance with input timing of said message character string; and
means for outputting at least one of an image and a sound according to said received emotion kind data and said determined emotion level.

8. A control method of a communication device used in a chat system and including:
a step for receiving the input of a message character string;
a step for receiving the input of emotion kind data showing the kind of an emotion;
a step for determining an emotion level in accordance with input timing of said message character string;
a step for transmitting said inputted message character string;
a step for transmitting said inputted emotion kind data; and
a step for transmitting said determined emotion level.

9. A control method of a communication device used in a chat system and including:
a step for receiving a message character string;
a step for receiving emotion kind data;
a step for outputting said received message character string;
a step for determining an emotion level in accordance with input timing of said message character string; and
a step for outputting at least one of an image and a sound according to said received emotion kind data and said determined emotion level.

10. An information storage medium storing a program for making a computer function as:
means for inputting a message character string;
means for inputting emotion kind data showing the kind of an emotion;
means for determining an emotion level in accordance with input timing of said message character string;
means for transmitting said inputted message character string;
means for transmitting said inputted emotion kind data and
means for transmitting said determined emotion level.

11. An information storage medium storing a program for making a computer function as:
means for receiving a message character string;
means for receiving emotion kind data;
means for outputting said received message character string;
means for determining an emotion level in accordance with input timing of said message character string; and
means for outputting at least one of an image and a sound according to said received emotion kind data and said determined emotion level.
